# EUROPÄISCHE PATENTSCHRIFT

(11) **EP 0 966 881 B1**
(45) Veröffentlichungstag und Bekanntmachung des Hinweises auf die Patenterteilung: **07.03.2001**
(21) Anmeldenummer: 99110730.1
(22) Anmeldetag: 04.06.1999
(51) Int. Cl.: A01K 5/02

(54) **Fütterungseinrichtung**
Feed device
Dispositif d'affouragement

(30) Priorität: 26.06.1998 DE 29811455 U
(43) Veröffentlichungstag der Anmeldung: 29.12.1999
(73) Patentinhaber: WEDA-DAMMANN & WESTERKAMP GmbH, 49424 Lutten (DE)
(72) Erfinder: Sextro, Franz-Josef kl., 49377 Vechta (DE)
(74) Vertreter: Busse & Busse Patentanwälte

(56) Entgegenhaltungen:
- EP-A- 0 126 240
- EP-A- 0 163 080
- EP-A- 0 296 260
- EP-A- 0 491 312
- DE-A- 3 419 842

## Beschreibung

Die Erfindung bezieht sich auf eine Fütterungseinrichtung in einer Ausbildung gemäß dem Oberbegriff des Anspruchs 1.

Bei einer bekannten Fütterungseinrichtung dieser Art (EP 0 491 312 B1) sind in der Verbraucherleitung drei Trennkörper geführt, und die Vorlaufleitungen sind mit den Enden der Verbraucherleitung und zusätzlich an jeweils in Abstand zu den Enden angeordneten Einspeisungsstellen mit der Verbraucherleitung verbindbar. Dies eröffnet eine Vielzahl von Bewegungsmöglichkeiten für die Trennkörper entlang der Verbraucherleitung.

Die Erfindung befaßt sich mit dem Problem einer Vereinfachung der Fütterungseinrichtung und löst dieses Problem durch eine Einrichtung mit den Merkmalen des Anspruchs 1. Hinsichtlich wesentlicher weiterer Ausgestaltungen wird auf die Ansprüche 2 bis 12 verwiesen.

Die Fütterungseinrichtung nach der Erfindung ermöglicht bei Ausführung mit nur einem einzigen Trennkörper das gezielte Ausfördern von Viehfutter der einen oder der anderen Zusammensetzung an jeder der Abzweigungen, wobei weiterhin unter Verwendung nur eines einzigen Trennkörpers auch die Möglichkeit eröffnet ist, an jeder Abzweigung gleichzeitig Teilmengen von Viehfutter unterschiedlicher Zusammensetzung abzugeben.

Weitere Einzelheiten und Wirkungen der Erfindung ergeben sich aus der nachfolgenden Beschreibung und der Zeichnung, in der mehrere Ausführungsbeispiele des Gegenstands der Erfindung schematisch näher veranschaulicht sind. In der Zeichnung zeigen:
- Fig. 1: ein Schaltungsbild einer Fütterungseinrichtung nach der Erfindung,
- Fig. 2: eine vergrößerte abgebrochene Schnittdarstellung durch eine Abzweigung in der Verbraucherleitung zur Veranschaulichung eines kugeligen Trennkörpers in Abgabestellung über einer Abzweigöffnung,
- Fig. 3: eine Darstellung ähnlich Fig. 2 zur Veranschaulichung einer Abzweigung mit einem in Abgabestellung über einer Abzweigöffnung befindlichen, einen beidseitigen Futterdurchgang freigebenden Trennkörper zylindrischer Grundbauart,
- Fig. 4: eine Darstellung ähnlich Fig. 2 und 3 zur Veranschaulichung einer zwei Teilabzweigungen umfassenden Abzweigung zu einem Verbraucher,
- Fig. 5: ein vereinfachtes Schaltbild einer Fütterungseinrichtung abgewandelter Ausführung, und
- Fig. 6: eine Darstellung der Fütterungseinrichtung nach Fig. 5 mit an Abzweigungen der Verbraucherleitung angeschlossenen weiteren Verbraucherleitungen.

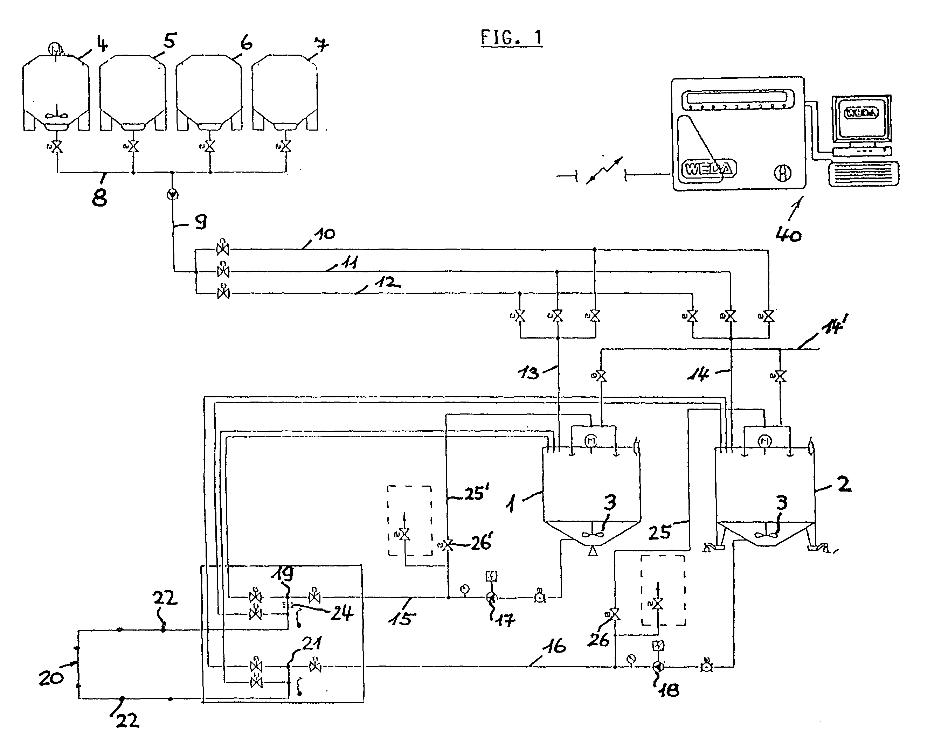

Die in Fig. 1 schematisch veranschaulichte Fütterungseinrichtung umfaßt zwei Wiegemischbehälter 1, 2, die jeweils mit einer Wiegevorrichtung gekuppelt und mit einem motorisch angetriebenen Rührwerk 3 versehen sind. Die Wiegemischbehälter 1,2 sind aus einer Anzahl von Vorratsbehältern 4,5,6,7 über Leitungen 8-14 mit Futterbestandteilen und über eine Wasseranschlußleitung 14' mit Wasser beschickbar. Die Wiegemischbehälter 1,2 dienen zur Zubereitung von Chargen von Viehfuttermischungen unterschiedlicher Zusammensetzung.

An den Bodenauslauf der Wiegemischbehälter 1,2 ist jeweils eine Vorlaufleitung 15 bzw. 16 angeschlossen, in denen sich jeweils eine bevorzugt als Dosierpumpe wie Schnecken- oder Kreiseldosierpumpe ausgebildete Futterpumpe 17 bzw. 18 befindet. Die Futterpumpen 17,18 können beispielsweise frequenzgeregelt sein. Die Vorlaufleitung 15 mündet am ersten Endpunkt 19 einer Verbraucherleitung 20 und die Vorlaufleitung 16 am zweiten Endpunkt 21 der Verbraucherleitung 20 in diese ein.

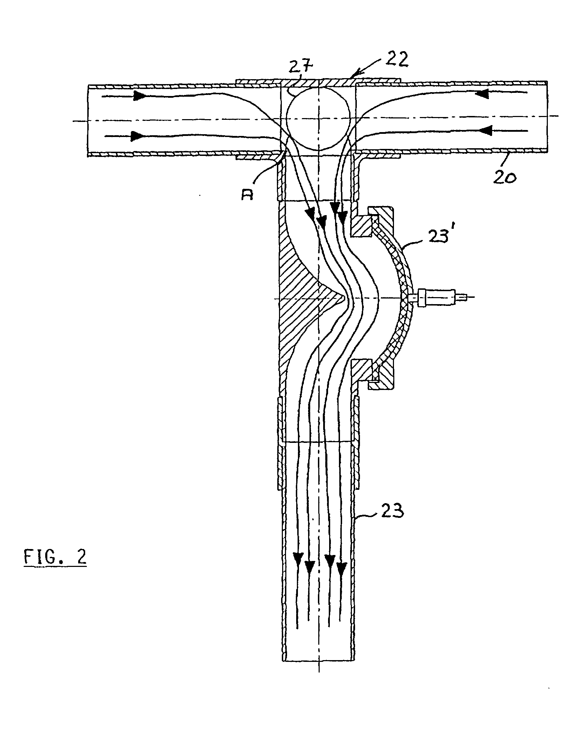

In der Verbraucherleitung 20 sind lediglich schematisch durch einen Verzweigungspunkt veranschaulichte Abzweigungen 22 zu Verbrauchern vorgesehen, deren Zahl sich nach den jeweiligen Bedürfnissen richtet. An die Abzweigungen 22 können wie in Fig. 1 und 2 gezeigt z.B. durch ein Ventil 23' gesteuerte Ablaufleitungen 23 zu Futterplätzen angeschlossen sein.

In der Verbraucherleitung 20 ist ein Trennkörper 24 vorgesehen, der in Fig. 1 nahe dem Endpunkt 19 der Verbraucherleitung 20 schematisch veranschaulicht ist.

Zu Beginn eines Fütterungsvorganges sind die Vorlaufleitungen 15,16 und die Verbraucherleitung 20 jeweils mit Viehfutter gefüllt, wobei sich eine Futtersäule vom Wiegemischbehälter 1 über den Endpunkt 19 der Verbraucherleitung 20 bis zum Trennkörper 24 erstreckt, während sich eine Futtersäule der zweiten Futtermischung vom Wiegemischbehälter 2 durch die Vorlaufleitung 16 und die Verbraucherleitung 20 bis hin zum Trennkörper 24 erstreckt.

In der einfachsten Ausführung der Fütterungseinrichtung mit Abzweigungen 22, an die ventilgesteuerte Ablaufleitungen 23 üblicher Art angeschlossen sind, kann an einer Abzweigung 22 jeweils eine der beiden Viehfuttermischungen, z.B. die aus dem Wiegemischbehälter 1 über die Vorlaufleitung 15 oder die aus dem Wiegemischbehälter 2 über die Vorlaufleitung 16, ausgegeben werden. Hierbei wird der Trennkörper 24 mit Hilfe der Futtersäulen jeweils in eine Position in Futterförderrichtung hinter einer Abzweigung 22 verbracht und dort durch das auf der abgewandten Seite des Trennkörpers 24 in der Verbraucherleitung 20 vorhandene Futter fixiert.

Zum Bewegen des Trennkörpers 24 beispielsweise aus einer dem Endpunkt 19 nahen Position in eine Position hinter irgendeiner beliebigen Abzweigung 22 wird in einer zum Wiegemischbehälter 2 führenden Rücklaufleitung 25 ein Ventil 26 geöffnet und die Futterpumpe 17 betätigt, bis der Trennkörper 24 die gewünschte Stellung erreicht hat. Danach wird das Ventil 26 geschlossen, wodurch der Trennkörper 24 in seiner Lage fixiert ist und bleibt, während anschließend nach Öffnen eines Ablaufventils 23' in der Ablaufleitung 23 an einer dem Trennkörper 24 auf der Seite der Futterpumpe 17 benachbarten Abzweigung 22 das Ausfördern von Viehfutter in einer vorgebenen Menge vorgenommen wird. Auf diese Weise kann an jeder der Abzweigungen 22 Viehfutter aus dem Wiegemischbehälter 1 ausgegeben werden. In analoger Form erfolgt ein Ausgeben von Viehfutter aus dem Wiegemischbehälter 2, was ebenfalls an jeder Abzweigung 22 erfolgen kann. Die entsprechende Rücklaufleitung zum Wiegemischbehälter 1 ist mit 25' und das zugehörige Ventil mit 26' bezeichnet. Für derartige Futterabgabevorgänge genügt ein herkömmlicher Trennkörper ohne doppelseitige Durchlaßfunktion.

Anstelle einer Abgabe von Viehfutter der einen oder anderen Zusammensetzung an einer Abzweigung 22 ist es auch möglich, an ein und derselben Abzweigung gleichzeitig eine Teilmenge an Viehfutter der ersten und an Viehfutter der zweiten Zusammensetzung abzugeben.

Fig. 2 veranschaulicht eine Ausführung, bei der sich ein Trennkörper 27 in einer Abgabestellung über der Abflußöffnung A einer Abzweigung 22 befindet und einen Futterdurchgang zur Abzweigöffnung A aus beiden angrenzenden Teilen der Verbraucherleitung 20 freigibt, wie das durch die angezeigten Strömungspfeile versinnbildlicht wird. Der Trennkörper 27 gemäß Fig. 2 ist dabei als Kugelkörper ausgebildet, der im Bereich seines größten Durchmessers Trennwirkung entfaltet, wobei der trennwirksame Teil eine axiale Erstreckung hat, die geringer ist als die Länge der Abzweigöffnung A.

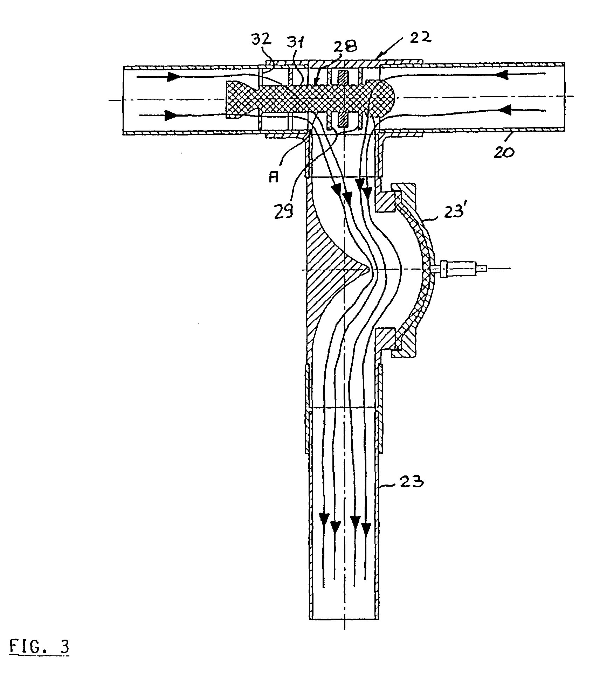

Bei der Ausführung gemäß Fig. 3 ist ein Trennkörper 28 vorgesehen, der eine zylindrische Grundform aufweist und einen trennwirksamen Teil 29 aufweist, dessen Abmessung in axialer Richtung des Trennkörpers 28 ebenfalls geringer ist als die der Abzweigöffnung A. Der trennungswirksame Teil 29 des Trennkörpers 28 wird beispielsweise von zwei im Abstand nebeneinander angeordneten, ringförmigen Dichtungsscheiben 29 gebildet, die auf einem zentralen Achsteil 31 des Trennkörpers 28 aufgesetzt sind. Dieser Achsteil 31 kann durch beispielsweise speichenförmige Führungsstücke 32 zusätzlich in der Verbraucherleitung 20 abgestützt und geführt sein. Auch ein derartiger Trennkörper 28 bietet die Möglichkeit zu einer gleichzeitigen Ausgabe von Teilmengen von Viehfutter beider Zusammensetzungen, die die Ausnehmungen im Trennkörper 28 beidseits des trennwirksamen Teils 29 durchströmen.

Durch den Druck in den beiderseitigen Futtersäulen werden die Trennkörper 27,28 in ihrer Abgabestellung in dynamischer Auspendelung gehalten, wobei über die Futterpumpen 17,18 der Mengenanteil bestimmbar ist.

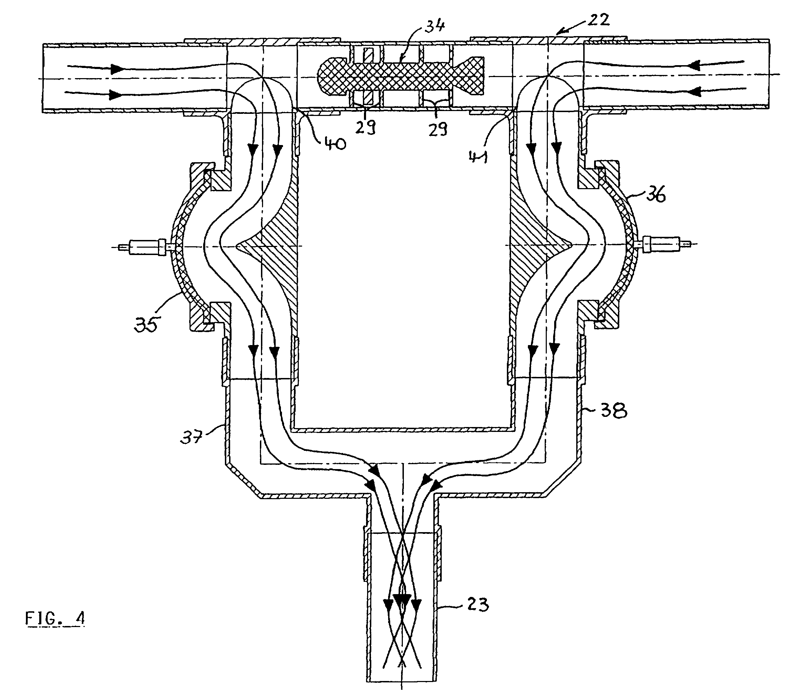

Die Fig. 4 veranschaulicht eine Variante mit einem dem Trennkörper 28 ähnlichen Trennkörper 34 und mit einer Abzweigung 22, die zwei im Abstand nebeneinander aus der Verbraucherleitung 20 ausmündende, unabhängig durch ein Ventil 35,36 gesteuerte Teilablaufleitungen 37,38 umfaßt, die in eine gemeinsame Ablaufleitung 23 münden. Der Abstand zwischen den Ausmündungsöffnungen 40,41 der Teilablaufleitungen 37,38 ist größer als der trennwirksame Teil des Trennkörpers 34, der hier beispielsweise von vier Dichtungsscheiben 29 gebildet wird. Für die gleichzeitige Ausgabe von Viehfutterteilmengen an einer solchen Abzweigung 22 wird der Trennkörper 34 in die dargestellte Lage zwischen den Teilablaufleitungen 37,38 verbracht, so daß Futter aus beiden Teilen der Verbraucherleitung 20 auf beiden Seiten am Trennkörper 34 vorbei ausfließen kann.

Zur Steuerung der Fütterungseinrichtung und ihrer Teile ist ein Zentralcomputer 40 vorgesehen, dessen Programm die Abfolge des Fütterungsvorganges von Anfang bis Ende bestimmt.

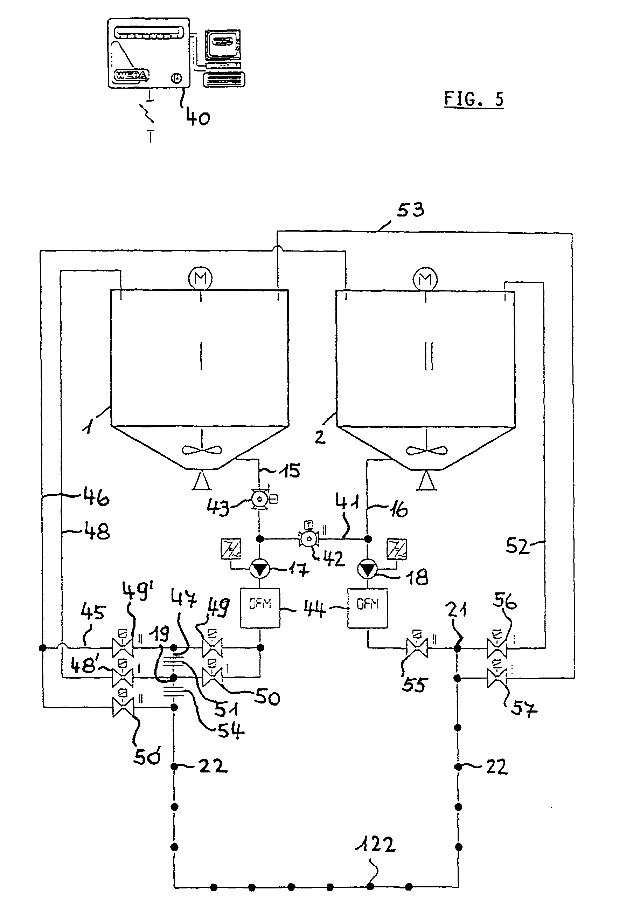

Fig. 5 zeigt in einer schematischen Darstellung eine Fütterungseinrichtung, bei der die mit der Einrichtung nach Fig. 1 übereinstimmenden Teile mit gleichen Bezugszeichen versehen sind. Die Wiegemischbehälter 1,2 sind wie bei der Einrichtung nach Fig. 1 aus Vorratsbehältern 4-7 mit Futterbestandteilen beschickbar, und ein dem Computer 40 entsprechender Computer dient zur Steuerung des Betriebsablaufes. Insofern ist die Einrichtung nach Fig. 5 gewissermaßen ein Ausschnitt aus der Einrichtung nach Fig. 1 mit nachstehenden Abwandlungen.

Die Vorlaufleitungen 15,16 sind durch eine Zwischenverbindungsleitung 41 im Bereich vor den Futterpumpen 17,18 verbunden. In der Zwischenverbindungsleitung befindet sich ein Ventil 42 zum wahlweisen Freigeben oder Verschließen der Leitung. Ein weiteres Ventil 43 befindet sich in der Zuleitung 15 im Bereich zwischen dem Wiegemischbehälter 1 und der Einmündung der Zwischenverbindungsleitung 41.

Aus der Vorlaufleitung 15 mündet stromab der Mündung der Zwischenverbindungsleitung 41 und stromab der Futterpumpe 17 und einem dieser nachgeordneten Durchflußmengenmeßgerät 44 eine Verbindungsleitung 45 aus, die in eine Rücklaufleitung 46 einmündet, die ihrerseits aus der Verbraucherleitung 20 nahe deren Endpunkt 19 ausmündet und zum Wiegemischbehälter 2 geführt ist. Aus der Verbindungsleitung 45 mündet ein Leitungsteil 47 aus, der an das Ende 19 der Verbraucherleitung 20 angeschlossen ist. An das Ende 19 der Verbraucherleitung 20 ist ferner eine Rücklaufleitung 48 mit darin befindlichem Ventil 48' angeschlossen, die zum Wiegemischbehälter 1 zurückführt.

In der Verbindungsleitung 45 sind beidseits der Ausmündung des Leitungsteils 47 Ventile 49,49' zum wahlweisen Freigeben bzw. Verschließen dieser Leitung vorgesehen. Ferner befinden sich entsprechende Ventile 50,50' in der Vorlaufleitung 15 im Bereich zwischen dem Endpunkt 19 der Verbraucherleitung 20 und der Ausmündung der Verbindungsleitung 45 sowie nahe dem Endpunkt 19 in der Rücklaufleitung 48.

Der Leitungsteil 47 hat eine nur geringe Länge und dient zur Aufnahme eines zweiten Trennkörpers 51, der bei Anordnung in dem Leitungsteil 47 seine Nichtgebrauchsstellung einnimmt.

An das Ende 21 der Verbraucherleitung 20 ist eine Rücklaufleitung 52 angeschlossen, die zum Wiegemischbehälter 2 zurückgeführt ist. Nahe dem Endpunkt 21 mündet aus der Verbraucherleitung 20 eine weitere Rücklaufleitung 53 aus, die zum Wiegemischbehälter 1 zurückgeführt ist. In der Zulaufleitung 16 ist nahe dem Endpunkt 21 der Verbraucherleitung 20 ein Ventil 55 vorgesehen. Auch in den Leitungen 52,53 sind nahe dem Endpunkt 21 Ventile 56,57 angeordnet.

Aufgrund dieser Ausgestaltung kann der in der Verbraucherleitung befindliche Trennkörper 54, der eine Ausbildung wie der Trennkörper 24, 27, 28 oder 34 haben kann, jene Abgabefunktionen für Futter erfüllen, wie sie vorstehend in Verbindung mit den Figuren 1 bis 4 beschrieben sind. Darüber hinaus eröffnet die Ausbildung der Einrichtung nach Fig. 5 die Möglichkeit, daß eine der beiden Futtermischungen vollständig verfütterbar ist und sich in der Verbraucherleitung 20 nur noch eine einzige Futtermischung befindet. Dies ist insbesondere dann wünschenswert, wenn eine Futtermischung, z.B. die im Wiegemischbehälter 1 zubereitete Futtermischung, besonders empfindlich bzw. leicht und schnell verderblich ist und deshalb nicht zwischen zwei Fütterungsvorgängen im Leitungssystem verbleiben sollte.

Ist beispielsweise die Futtermischung im Wiegemischbehälter 1 eine z.B. wegen hoher Eiweißkonzentration empfindliche Futtermischung und ist im Zuge eines Fütterungsvorganges die Abgabe in der in den Wiegemischbehältern 1,2 zubereiteten Futtermischungen an den jeweils dafür vorgesehenen Abzweigungen 22 im wesentlichen abgeschlossen, dann befindet sich im Wiegemischbehälter 2 noch eine vorberechnete Restmenge an Futter, die ausreicht, um diejenigen Teile des Leitungssystems zu füllen, die zu diesem Zeitpunkt noch mit Futter aus dem Wiegemischbehälter 1 gefüllt sind, während gleichzeitig der Wiegemischbehälter 1 entleert ist. Bei Stellung des Trennkörpers 54 beispielsweise an der Abzweigung 122 wird das Ventil 43 geschlossen und das Ventiil 42 geöffnet mit der Folge, daß nunmehr beide Futterpumpen 17,18 Futter aus dem Wiegemischbehälter 2 ausfördern können. Wird das Ventil 55 in der Zulaufleitung 16 geschlossen, während die Ventile 56,57 in den Rücklaufleitungen 52,53 geschlossen bleiben, so kann nunmehr durch Öffnen des Ventils 49 und Schließen des Ventils 50 bei geschlossenen Ventilen 48',50' in den Rücklaufleitungen 46,48 und bei geschlossenem Ventil 49' im Leitungsteil 47 dieser mit Futter aus dem Wiegemischbehälter 2 beaufschlagt werden und das in der Verbraucherleitung 20 noch vorhandene, aus dem Wiegemischbehälter 1 stammende Futter an einer oder mehreren der Abzweigungen 22, zuletzt z.B. an der Abzweigung 122, ausgegeben werden, wobei sich der Trennkörper 51 bis an den Trennkörper 54 heranbewegt.

Danach können beide Trennkörper 51, 54 in ihre in Fig. 5 veranschaulichte Nichtgebrauchs- bzw. Ausgangsstellung zurückbewegt werden. Hierzu werden die Ventile 49' und 55 geöffnet und die Ventile 49, 50 geschlossen. Das zwischen dem Trennkörper 51 und dem Endpunkt 19 der Verbraucherleitung 20 in dieser befindliche Futter wird durch die Wirkung der Futterpumpe 18 unter Zurückbewegen der Trennkörper 51, 54 in die gezeigten Stellungen in den Wiegemischbehälter 2 rückgeführt. Bei Abschluß dieses Vorganges ist das empfindliche Futter aus dem Wiegemischbehälter 1 vollständig verfüttert und die beständigere Futtermischung aus dem Wiegemischbehälter 2 füllt komplett das Leitungssystem, von jenem vernachlässigbaren Stück der Vorlaufleitung 15 abgesehen, das sich zwischen dem Bodenauslauf aus dem Wiegemischbehälter 1 und dem Ventil 43 befindet.

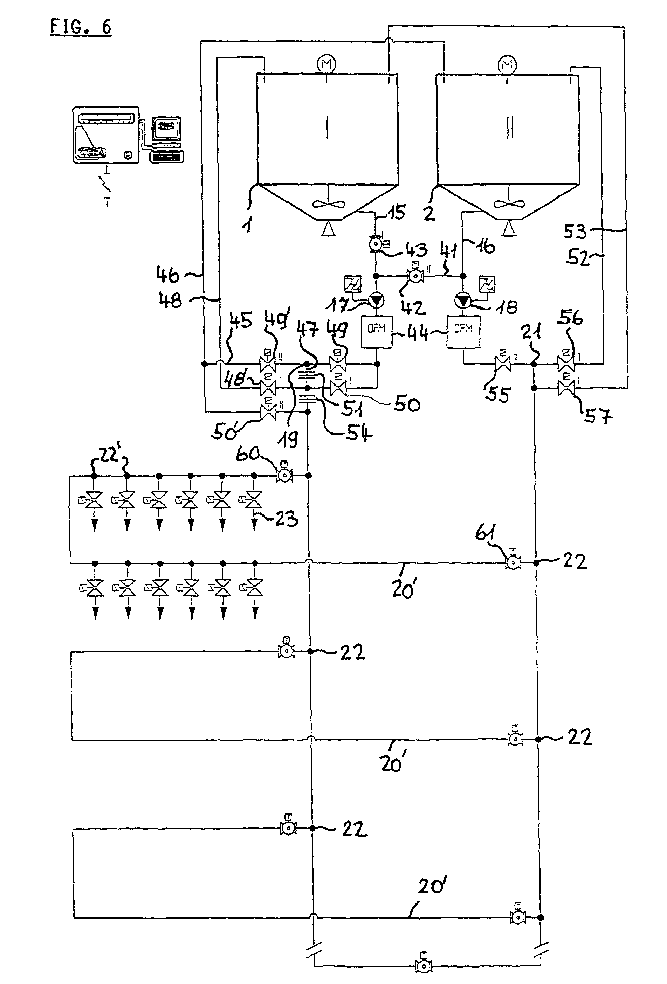

Fig. 6 veranschaulicht eine Einrichtung nach Fig. 5 mit dem Unterschied, daß an die Abzweigungen 22 der Verbraucherleitung 20 ihrerseits Verbraucherleitungen bildende Leitungen 20' angeschlossen sind, die jeweils durch nahe den Abzweigungen 22 der Verbraucherleitung 20 angeordnete Ventile 60,61 freigegeben bzw. abgesperrt werden können und Abzweigungen 22' entsprechend denen in Fig. 1 bis 5 aufweisen. Bei zweckgerechter Anordnung des Trennkörpers 54 können die Verbraucherleitungen 20' wahlweise Futter aus einem der beiden Wiegemischbehälter 1,2 oder gleichzeitig aus beiden erhalten, wobei das Mischungsverhältnis durch die Futterpumpen 17,18 bestimmt werden kann.

## Patentansprüche

1. Fütterungseinrichtung, mit zwei aus Vorratsbehältern (4,5,6,7) mit Futterbestandteilen beschickbaren Wiegemischbehältern (1,2) für die Zubereitung von zwei Viehfuttermischungen unterschiedlicher Zusammensetzung, je einer an den Bodenauslauf der Wiegemischbehälter (1,2) angeschlossenen, eine Futterförderpumpe (17,18) einschließenden Vorlaufleitung (15,16), einer Verbraucherleitung (20), die an die Vorlaufleitungen (15,16) angeschlossen ist, eine Mehrzahl von ventilgesteuerten Abzweigungen (22) zu Verbraucherstellen aufweist und Trennkörper führt und mit einem zentralen Steuerungscomputer (40), **dadurch gekennzeichnet**, daß die Verbraucherleitung (20) an nur ihren Enden (19,21) mit einer der Vorlaufleitungen (15,16) verbunden und mit nur einem einzigen Trennkörper (24;27;28;34,54) zur Futtertrennung versehen ist.

2. Fütterungseinrichtung nach Anspruch 1, **dadurch gekennzeichnet,** daß die Futterförderpumpen (17,18) in den Vorlaufleitungen als Dosierpumpen ausgebildet sind.

3. Fütterungseinrichtung nach Anspruch 1 oder 2, **dadurch gekennzeichnet**, daß ein Trennkörper (24,27,28,34,54) vorgesehen ist, der in einer Abgabestellung über der Abzweigöffnung einer Abzweigung (22) einen Futterdurchgang zur Abzweigöffnung aus beiden angrenzenden Teilen der Verbraucherleitung (20) freigibt.

4. Fütterungseinrichtung nach Anspruch 3, **dadurch gekennzeichnet,** daß der Trennkörper (27) als Kugelkörper ausgebildet ist.

5. Fütterungseinrichtung nach Anspruch 3, **dadurch gekennzeichnet,** daß der Trennkörper (28) einen trennwirksamen Teil (29) aufweist, dessen axiale Abmessung geringer ist als die der Abzweigöffnung, und zu beiden Seiten einen Futterdurchlaß darbietet.

6. Fütterungseinrichtung nach einem der Ansprüche 1 bis 5, **dadurch gekennzeichnet**, daß an die Abzweigungen (22) der Verbraucherleitung (20) Ablaufleitungen (23) zu Futterplätzen angeschlossen sind.

7. Fütterungseinrichtung nach einem der Ansprüche 1 bis 6, **dadurch gekennzeichnet**, daß die Abzweigung (22) zwei im Abstand nebeneinander aus der Verbraucherleitung (20) ausmündende, unabhängig ventilgesteuerte Teilablaufleitungen (37,38) umfaßt, die in eine gemeinsame Ablaufleitung (23) münden.

8. Fütterungseinrichtung nach Anspruch 7, **dadurch gekennzeichnet**, daß der Abstand zwischen den Ausmündungsöffnungen (40,41) der Teilablaufleitungen (37,38) größer ist als zumindest der trennwirksame Teil (29) des Trennkörpers (34).

9. Fütterungseinrichtung nach einem der Ansprüche 1 bis 8, **dadurch gekennzeichnet**, daß an Abzweigungen (22) der Verbraucherleitung (20) ihrerseits Verbraucherleitungen bildende, mit Abzweigungen zu Verbrauchern versehene Leitungen angeschlossen sind.

10. Fütterungseinrichtung nach einem der Ansprüche 1 bis 9, **dadurch gekennzeichnet,** daß ein zweiter Trennkörper (51) vorgesehen ist, der aus einer Nichtgebrauchsstellung in einem dem einen Ende (19) der Verbraucherleitung (20) benachbarten Leitungsteil (47) in die Verbraucherleitung (20) überführbar und auf seiner dem ersten Trennkörper (54) abgewandten Seite aus einer an eine der Vorlaufleitungen (15,16) angeschlossene Verbindungsleitung (45) aus einem der beiden Wiegemischbehälter (1,2) mit Futter beaufschlagbar und durch dieses in Richtung zum ersten Trennkörper (54) hin verlagerbar ist.

11. Fütterungseinrichtung nach Anspruch 10, **dadurch gekennzeichnet,** daß die Vorlaufleitungen (15,16) von den Wiegemischbehältern (1,2) zu den Futterpumpen (17,18) untereinander durch eine ventilgesteuerte Zwischenverbindungsleitung (41) verbindbar ist, in einer Vorlaufleitung (15) stromauf der Mündung der Zwischenverbindungsleitung (41) ein Absperrventil (43) vorgesehen ist und die Verbindungsleitung (45) stromab der Mündung der Zwischenverbindungsleitung (41) an die Vorlaufleitung (15) angeschlossen ist.

12. Fütterungseinrichtung nach einem der Ansprüche 10 oder 11, **dadurch gekennzeichnet,** daß den beiden Futterpumpen (17,18) jeweils ein Durchflußmengenmeßgerät (44) nachgeordnet ist.

## Claims

1. A feeding installation with two weighing-mixing containers (1, 2) adapted to be charged with fodder constituents from storage containers (4, 5, 6, 7), for the preparation of two cattle feed mixtures of different composition, and with, connected to the bottom outlet of each weighing-mixing container (1, 2), a header pipe (15, 16) including a feed conveyor pump (17, 18), a consumer pipe (20) which is connected to the header pipes (15, 16), a plurality of valve-controlled branches (22) to consumer units and which guides separators, and with a central control computer (40), characterised in that the consumer pipe (20) is connected to one of the header pipes (15, 16) only at its ends and is provided with only one single separator (24; 27; 28; 30; 54) for feed separation.

2. A feeding installation according to claim 1, characterised in that the feed conveyor pumps (17, 18) in the header pipes are constructed as controlled-volume pumps.

3. A feeding installation according to claim 1 or 2, characterised in that a separator (24, 27, 38, 34, 54) is provided which, in a delivery position, opens up via a branch aperture of a branch (22) a feed throughway to the branch orifice from both adjacent parts of the consumer pipe (20).

4. A feeding installation according to claim 3, characterised in that the separator (27) is constructed as a spherical body.

5. A feeding installation according to claim 5, characterised in that the separator (28) comprises a part (29) which is an effective separator and the axial dimension of which is less than that of the branch orifice and which offers to both sides a passage through which feed can pass.

6. A feeding installation according to one of claims 1 to 5, characterised in that outlet pipes (23) to feed places are connected to the branches (22) of the consumer pipe (20).

7. A feeding installation according to one of claims 1 to 6, characterised in that the branch (22) comprises two adjacently spaced apart independently valve-controlled partial outlet pipes (37, 38) which emerge from the consumer pipe (20) and open out into one common outlet pipe (23).

8. A feeding installation according to claim 7, characterised in that the gap between the outlet orifices (40, 41) of the partial outlet pipes (37, 38) is greater than at least the part (29) of the separator (34) which is an effective separator.

9. A feeding installation according to one of claims 1 to 8, characterised in that pipes provided with branches to consumers and forming consumer pipes in their turn are connected to branches (22) of the consumer pipe (20).

10. A feeding installation according to one of claims 1 to 9, characterised in that a second separator (51) is provided which can be moved out of an inoperative position into the consumer pipe (20) in a part (47) of the pipe which is adjacent to one end (19) of the consumer pipe (20) and which can on its side remote from the first separator (54), be charged with fodder from one of the two weighing-mixing containers (1, 2) from a connecting pipe (45) connected to one of the header pipes (15, 16) and moved thereby in the direction of the first separator (54).

11. A feeding installation according to claim 10, characterised in that the header pipe (15, 16) from the weighing-mixing container (1, 2) to the feed pump (17, 18) can be connected to one another by a valve-controlled intermediate connecting pipe (41) and in that in a header pipe (15) upstream of the outlet of the intermediate connecting pipe (41) there is a shut-off valve (43) and in that the connecting pipe (45) is connected to the header pipe (15) downstream of the mouth of the intermediate connecting pipe (41).

12. A feeding installation according to one of claims 10 or 11, characterised in that downstream of each of the two feed pumps (17, 18) there is a throughflow quantity measuring instrument (44).

## Revendications

1. Dispositif d'affouragement avec deux cuves de mélange et de pesage (1, 2) qui peuvent être alimentées en composants de fourrage à partir des cuves de stockage (4, 5, 6 ou 7) pour la préparation de deux mélanges de fourrage de différentes compositions, avec une conduite d'amenée (15, 16) raccordée à la sortie sur le fond de chaque cuve de mélange et de pesage (1, 2) et comprenant une pompe de refoulement de fourrage (17, 18), avec une conduite de consommation (20), qui est raccordée aux conduites d'amenée (15, 16), présente une pluralité d'embranchements (22) commandés par des vannes vers les points de consommation et guide des corps séparateurs, et avec un ordinateur de commande central (40), caractérisé en ce que la conduite de consommation (20) est reliée seulement à ses extrémités (19, 21) à l'une des conduites d'amenée (15, 16) et n'est pourvue que d'un seul corps séparateur (24; 27; 28; 34; 54) pour la séparation de fourrage.

2. Dispositif d'affouragement selon la revendication 1, caractérisé en ce que les pompes de refoulement de fourrage (17, 18) dans les conduites d'amenée se présentent sous la forme de pompes de dosage.

3. Dispositif d'affouragement selon la revendication 1 ou 2, caractérisé en ce qu'il-est prévu un corps séparateur (24; 27; 28; 34; 54) qui ouvre en position de délivrance, au-dessus de l'ouverture d'un embranchement (22), un passage de fourrage vers l'ouverture de l'embranchement à partir des deux parties limitrophes de la conduite de consommation (20).

4. Dispositif d'affouragement selon la revendication 3, caractérisé en ce que le corps séparateur (27) se présente sous la forme d'un corps sphérique.

5. Dispositif d'affouragement selon la revendication 3, caractérisé en ce que le corps séparateur (28) présente une partie séparatrice efficace (29), dont la dimension axiale est inférieure à celle de l'ouverture de l'embranchement et présente sur les deux côtés un passage de fourrage.

6. Dispositif d'affouragement selon l'une quelconque des revendications 1 à 5, caractérisé en ce que des conduites d'écoulement (23) sont raccordées aux embranchements (22) de la conduite de consommation (20) vers des emplacements de fourrage.

7. Dispositif d'affouragement selon l'une quelconque des revendications 1 à 6, caractérisé en ce que l'embranchement (22) présente deux conduites d'écoulement partielles (37, 38) commandées indépendamment par des vannes et débouchant à distance l'une de l'autre et l'une à côté de l'autre de la conduite de consommation (20), lesdites conduites débouchant dans une conduite d'écoulement commune (23).

8. Dispositif d'affouragement selon la revendication 7, caractérisé en ce que la distance entre les ouvertures d'embouchure (40, 41) des conduites d'écoulement partielles (35, 36) est plus importante qu'au moins la partie séparatrice efficace (29) du corps séparateur (34).

9. Dispositif d'affouragement selon l'une quelconque des revendications 1 à 8, caractérisé en ce que, à des embranchements (22) de la conduite de consommation (20), sont raccordées, des conduites formant de leur côté des conduites de consommation pourvues d'embranchements vers des consommateurs.

10. Dispositif d'affouragement selon l'une quelconque des revendications 1 à 9, caractérisé en ce qu'il est prévu un second corps séparateur (51), qui peut être transféré d'une position de non-utilisation dans une partie de conduite (47), voisine d'une extrémité (19) de la conduite de consommation (20), dans la conduite de consommation (20), qui peut être alimenté en fourrage depuis l'une des deux cuves de mélange et de pesage (1, 2) sur son côté opposé au premier corps séparateur (54) à partir d'une conduite de liaison (45) raccordée à l'une des conduites d'amenée (15, 16) et qui peut être déplacé par le fourrage dans la direction du premier corps séparateur (54).

11. Dispositif d'affouragement selon la revendication 10, caractérisé en ce que les conduites d'amenée (15, 16) peuvent être raccordées l'une à l'autre des cuves de mélange et de pesage (1,2) aux pompes à fourrage (17, 18) via une conduite de liaison intermédiaire (41) commandée par une vanne, il est prévu, dans une conduite d'amenée (15) en amont de l'embouchure de la conduite de liaison intermédiaire (41), une vanne d'arrêt (43) et la conduite de liaison (45) en aval de l'embouchure de la conduite de liaison intermédiaire (41) est raccordée à la conduite d'amenée (15).

12. Dispositif d'affouragement selon l'une quelconque des revendications 10 ou 11, caractérisé en ce que, à chaque fois, un débitmètre (44) est disposé en aval des deux pompes à fourrage (17, 18).
